# EUROPÄISCHE PATENTSCHRIFT

(11) **EP 0 664 010 B1**
(45) Veröffentlichungstag und Bekanntmachung des Hinweises auf die Patenterteilung: **20.08.1997**
(21) Anmeldenummer: 93922907.6
(22) Anmeldetag: 01.10.1993
(51) Int. Cl.: G01S 17/88

(54) **VERFAHREN UND VORRICHTUNG ZUR RELATIVEN SICHTWEITENBESTIMMUNG**
RELATIVE VISIBILITY MEASURING PROCESS AND DEVICE
PROCEDE ET DISPOSITIF DE MESURE DE LA VISIBILITE RELATIVE

(30) Priorität: 05.10.1992 DE 4233379
(43) Veröffentlichungstag der Anmeldung: 26.07.1995
(73) Patentinhaber: Leica AG, CH-9435 Heerbrugg (CH)
(72) Erfinder: METZ, Jürgen, D-35435 Wettenberg (DE); TIEDEKE, Joachim, D-88147 Achberg (DE)
(74) Vertreter: Stamer, Harald, Dipl.-Phys.
(86) Internationale Anmeldenummer: EP9302689
(87) Internationale Veröffentlichungsnummer: WO9408254

(56) Entgegenhaltungen:
- DE-A- 2 156 063
- DE-U- 8 912 983
- FR-A- 2 266 895
- GB-A- 1 150 502

## Beschreibung

Die Erfindung betrifft ein Verfahren und eine Vorrichtung zur relativen Sichtweitenbestimmung.

Das Bedürfnis einer möglichst fehlerfreien Nebelmessung bzw. Sichtweitenbestimmung ergibt sich aus verschiedenen öffentlichrechtlichen Vorschriften. So entspricht z.B. für den Straßenverkehr in der Bundesrepublik Deutschland einer vorgeschriebenen Geschwindigkeitsbegrenzung in [km/h] eine Mindestsichtweite in [m] vom doppelten Zahlenwert. Als spezielle Regelung gilt laut StVO, daß bei einer Sichtweite unter 50 [m] eine Höchstgeschwindigkeit von 50 [km/h] zu beachten ist. Auf Flugplätzen treten bei Unterschreitung bestimmter Sichtweiten Start- bzw. Landeverbote in Kraft. Zur Einhaltung bzw. Überwachung dieser Vorschriften sind exakte und zuverlässige Meßgeräte erforderlich.

Es sind Geräte zur Nebelmessung nach der Durchlichtmethode bekannt, die aus einem Sender und einem diesem gegenüber angeordneten Empfänger in einem geringen Abstand bestehen (ca. 1 [m] bis ca. Fahrbahnbreite). Unter idealen Sichtbedingungen werden die vom Sender ausgesendeten Signale mit einer bestimmten Signalamplitude detektiert. Bei Nebel, Regen, Rauch usw. tritt durch Absorption und Streuung eine Abschwächung der empfangenen Signale auf. Die Signalabschwächung ist umso stärker, je dichter der Nebel o.ä. ist, d.h. je geringer die Sichtweite ist. Bei Unterschreiten einer bestimmten Signalschwelle wird eine Nebelwarnung ausgelöst.

Fehlmessungen in Form von unerkannten sichtweitenbegrenzenden Zuständen wie z.B. Nebel und daraufhin unterlassenen Nebelwarnungen können durch Auftreten von lokal begrenzten "Nebellöchern" in dem verhältnismäßig kurzen Meßweg entstehen.

Weil der Sender und der Empfänger auf einem stabilen, in der Regel metallischen Balken montiert werden, kann zusätzlich bei ungünstiger Witterung ( z. B. schneller Lufttemperaturanstieg, insbesondere nach einer kalten Nacht ) durch Kondensation der Nebeltröpfchen an der großen kalten Masse des Balkens der Effekt solcher "Nebellöcher" vom Meßgerät selbst hervorgerufen werden.

Andererseits können Fehlmessungen in Form von falschen Nebelwarnungen, also ohne Auftreten von Nebel o.ä., durch Verschmutzungen der Außenflächen von Sender und Empfänger verursacht werden, da diese auch zu einer Abschwächung der empfangenen Signale und damit zur Auslösung der falschen Nebelwarnung führen.

Ebenso wird eine falsche Nebelwarnung ausgelöst, wenn ein Hindernis zwischen Sender und Empfänger gelangt (z.B. ein Vogel). Die durch das Hindernis bewirkte Abschwächung der empfangenen Signale löst ebenfalls eine falsche Nebelwarnung aus.

Eine Differenzierung zwischen den genannten Meßstörungen und echten Nebelwarnungen ist mit der beschriebenen Durchlichtmethode nicht möglich.

Eine andere, in der DE-AS 21 56 063 beschriebene Methode besteht darin, einer Sende-/Empfangseinrichtung in unterschiedlichen Abständen verschiedene Reflektoren gegenüberzustellen.Die Reflektionseigenschaften dieser Reflektoren werden so gewählt, daß bei einer gewissen Bezugssichtweite die Empfangssignale von allen Reflektoren gleich groß sind. Die Empfangssignale sind aufgrund ihrer entfernungsabhängigen Laufzeit unterscheidbar. Bei Unterschreiten des für die Bezugssichtweite geltenden Signalpegels definiert die Entfernung des zugehörigen Reflektors die maximale Sichtweite.

Die Abstände zwischen den auf einer Linie liegenden Reflektoren müssen relativ groß gewählt werden, um die Empfangssignale sicher voneinander trennen zu können und Übersteuerungseffekte in der Empfangseinrichtung zu vermeiden. Die Sichtweitenbestimmung ist daher verhältnismäßig grob.

In der DE-AS 25 13 061 wird eine Weiterbildung beschrieben, bei der die in unterschiedlichen Abständen aufgestellten Reflektoren seitlich gegeneinander versetzt sind. Die Sende-/Empfangseinheit tastet die Reflektoren nacheinander ab, so daß die Abtaststellung den jeweils angestrahlten Reflektor definiert. Die Anzahl der mit einer vorgewählten Signalamplitude "sichtbaren" Reflektoren definiert die Sichtweite. Die zur Durchlichtmethode bereits angegebenen Meßstörungen können auch hier nicht erkannt werden.

Weiter sind Geräte zur Nebelmessung bekannt, die nach der Streulichtmethode arbeiten. Sie bestehen aus einem Sender und einem Empfänger, die nebeneinander angeordnet sind. Der Empfänger detektiert nur dann Anteile der vom Sender ausgesendeten Signale (meist Licht), wenn vor der Sender-Empfänger-Anordnung rückstreuende Partikel, wie Nebel o.ä., vorhanden sind. Die Größe des rückgestreuten Signalanteils hängt von der Zahl der als Streuzentren wirkenden Nebeltröpfchen, also der Dichte des Nebels, und damit von der Sichtweite ab. Überschreiten die empfangenen Signale eine bestimmte Signalschwelle, wird eine Nebelwarnung ausgelöst. Da die durch Rückstreuung verursachten Empfangssignale nur kleine Amplituden aufweisen, muss die Signalschwelle ebenfalls niedrig gewählt werden. Dadurch können auch durch ziemlich weit entfernte feste Hindernisse mit gutem Reflexionsvermögen im Meßstrahlengang ausreichend große Empfangssignale und damit falsche Warnungen ausgelöst werden.

Andererseits können im Falle tatsächlich vorhandenen Nebels die Rückstreusignale durch Verschmutzungen der Aussenflächen von Sender und Empfänger soweit geschwächt werden, daß die Empfangssignale die Warnschwelle nicht überschreiten. Eine erforderliche Nebelwarnung wird also nicht ausgelöst.

Auch die nach der Streulichtmethode arbeitenden Geräte können daher nicht zwischen Meßstörungen und echten sichtweitenbegrenzenden Zuständen unterscheiden.

Der Erfindung liegt die Aufgabe zugrunde, ein Verfahren und eine Vorrichtung zur relativen Sichtweitenbestimmung anzugeben, welche neben der Detektion und Anzeige von Nebel, Regen, Schnee, Rauch usw. Fehlanzeigen aufgrund von Meßstörungen ausschliessen und die Art eines Meßstörers anzeigen sollen. Außerdem soll das System auf einfachste Weise am Meßort unter Einbeziehung ohnehin vorhandener Elemente aufgebaut werden können.

Diese Aufgabe wird bei einem Verfahren der eingangs genannten Art erfindungsgemäß durch die Merkmale des Anspruchs 1 gelöst. Eine Vorrichtung zur Ausübung dieses Verfahrens ist im Anspruch 11 angegeben. Vorteilhafte Weiterbildungen des Verfahrens sowie vorteilhafte Ausbildungen der Vorrichtung ergeben sich aus den jeweiligen Unteransprüchen.

Die Erfindung bietet den Vorteil einer Selbstkontrolle des Meßsystems. Es ist möglich, eine Sichtweitenunterschreitung von einer Meßstörung zu unterscheiden und damit Fehlwarnungen auszuschliessen. Durch die Detektion und Anzeige von Meßstörungen können automatisch Servicefunktionen zur Behebung der Meßstörung angefordert oder ausgelöst werden.

Der Erfindung liegt die Erkenntnis zugrunde, daß nach dem Impulslaufzeitprinzip arbeitende Entfernungsmesser zum eine die nach der vorgenannten Durchlichtmethode ausgenutzte Signalschwächung in dem ausgesendeten Impuls detektieren. Zum anderen erlauben solche Geräte auch die Aufnahme der Signalform des über die Meßstrecke gelaufenen Impulses. Streuzentren oder reflektierende Hindernisse innerhalb der Meßstrecke erzeugen Signale, die zeitlich früher ankommen als der über die reguläre Meßstrecke gelaufene Impuls. Es können daher gleichzeitig auch die nach der vorgenannten Streulichtmethode ausgesuchten Signale mit ausgewertet werden. Dabei wird davon ausgegangen, daß bestimmte die Sichtweite beeinflussende Zustände der Meßstrecke einen typischen Verlauf der zeitlich früher ankommenden Empfangssignale erzeugen. Solchen Zuständen können Standardformen im Signalverlauf zugeordnet werden. Durch Vergleich der detektierten Signalform mit einer oder mehreren Standardformen kann dann z.B. eine qualitative Aussage über das Vorhandensein oder Nichtvorhandensein von Nebel oder einem Hindernis getroffen werden und in Kombination mit der quantitativen Messung der Signalschwächung eine Aussage über die relative Sichtweite bzw. Sichtweitenunterschreitung gewonnnen werden. Die logische Verknüpfung beider Informationen erlaubt es, Meßstörungen zu erkennnen. Ein geeigneter Entfernungsmesser ist z.B. in der PCT-Offenlegungsschrift WO 88/05922 beschrieben.

Gegenüber bekannten Systemen ist die Installation des Meßsystems durch die Einbeziehung eines beliebigen, am Meßort bereits vorhandenen Reflektors denkbar einfach. So können mit Ausnahme des Reflektors alle Vorrichtungselemente in einem Gehäuse integriert werden. Dieses so erhaltene Gerät wird dann nur noch in einem für die festzustellende Sichtweite geeigneten Abstand zu einem beliebigen, am Meßort bereits vorhandenen Reflektor ( z.B. Straßenbegrenzungspfosten, Gebäude, Pfahl o.ä.) aufgestellt und in Betrieb genommen. Der Lichtweg kann so lang gewählt werden, daß die Messung nicht durch lokale Inhomogenitäten ("Löcher") im z. B. Nebel verfälscht wird.

Nachdem der Entfernungsmesser und der Reflektor in den erforderlichen gegenseitigen Abstand gebracht wurden, wird zunächst eine Referenzmessung durchgeführt. Dazu wird unter Idealbedingungen, also bei guter Sicht und mit sauberen Außenflächen an Reflektor und Entfernungsmesser, eine Entfernungsmessung durchgeführt. Der erhaltene Entfernungswert wird als Referenzentfernung und die zugehörige Pulslaufzeit als Referenzlaufzeit bezeichnet. Der erhaltene Amplitudenwert des vom Reflektor zurückgeworfenen Meßpulses wird als Referenzamplitude bezeichnet. Die Referenzlaufzeit und die Referenzamplitude werden als Vergleichsnormal für die Sichtweitenbestimmung relativ zur Referenzentfernung abgespeichert.

Dann wird unter Realbedingungen, also bei zufälliger Qualität von Sicht und Sauberkeit der Außenflächen an Entfernungsmesser und Reflektor, ein als Realsignal bezeichneter zeitlicher Verlauf der Empfangssignale des Pulslaufzeit-Entfernungsmessers gemessen und gespeichert.

Danach wird aus dem betreffenden Speicher die Amplitude des zeitlichen Anteils des Realsignals abgefragt, welcher eine Laufzeit gleich der Referenzlaufzeit besitzt. Diese wird als Realamplitude bezeichnet. Die Realamplitude ist also die Amplitude des zeitlichen Anteils des Realsignals, der aus der Referenzentfernung, also nach Reflexion am Reflektor, zum Entfernungsmesser zurückkehrt. Da bei Auftreten von z.B. systemfremden Objekten innerhalb der Referenzentfernung ein Teil des Meßpulses an diesen Objekten reflektiert wird, ist die Realamplitude in diesen Fällen abgeschwächt im Vergleich zu idealen Sichtbedingungen. Der Teil des Meßpulses, der an den systemfremden Objekten reflektiert wird,verursacht dann aber im Realsignal zusätzliche Amplitudenanteile mit Laufzeiten unterhalb der Referenzlaufzeit.

Die Realamplitude wird ins Verhältnis gesetzt zur Referenzamplitude. Die Verhältniszahl wird verglichen mit einem Schwellwert, der das Maß an Signalabschwächung in der Referenzentfernung repräsentiert, ab dem z.B. Nebel die Sichtweite verkürzt. Wenn also das Verhältnis von Realamplitude zu Referenzamplitude den Schwellwert unterschreitet, ist die Bedingung für eine anscheinend vorhandene Sichtweitenunterschreitung erfüllt.

Zur Kontrolle, ob tatsächlich eine Sichtweitenunterschreitung vorliegt, wird das Realsignal daraufhin untersucht, ob in einem Bereich mit Laufzeiten unterhalb der Referenzlaufzeit ein weichzielspezifischer Amplitudenverlauf vorliegt. Ein solcher weichzielspezifischer Amplitudenverlauf ist asymmetrisch und zeichnet sich z.B. durch eine Flanke aus, die durch eine Exponentialfunktion beschrieben wird. Dies beruht darauf, daß Weichziele, wie z.B. Nebel, Regen, Schnee, Rauch usw., keine Reflexionsfläche aufweisen, sondern daß eine Streuung an den einzelnen räumlich verteilten Teilchen des Weichzieles stattfindet (z. B. Nebeltröpfchen, Schneeflocken).

Demgegenüber ist ein beliebiger Reflektor (Pfosten, Gebäude usw.) ein Hartziel mit einer bekannten, makroskopischen Reflexionsfläche. Dies führt zu einem hartzielspezifischen, nämlich symmetrischen Amplitudenverlauf im Bereich des Realsignals mit Laufzeiten unterhalb der Referenzlaufzeit. Ein hartzielspezifischer Amplitudenverlauf gehorcht im allgemeinen einer Gauß-Verteilung.

Wenn nun beide Bedingungen für eine real vorliegende Sichtweitenunterschreitung erfüllt sind, d. h. wenn
1. das Verhältnis von Realamplitude zu Referenzamplitude den Schwellwert unterschreitet,
und zugleich
2. Bereiche im Realsignal unterhalb der Referenzlaufzeit einen weichzielspezifischen Amplitudenverlauf aufweisen,
wird ein Schalt- und/oder Warnsignal mit der Kennung "Sichtweitenunterschreitung" ausgelöst. Damit kann z.B. eine akustische oder visuelle Nebelwarnung abgegeben werden. Im Straßenverkehr kann z.B. eine der unterschrittenen Sichtweite entsprechende Geschwindigkeitsbegrenzung aktiviert oder ein elektronisches Nebelwarnschild angesteuert werden. Auf Flugplätzen kann die Nebel- oder Schneefallwarnung ausgelöst werden.
Wenn dagegen
1. das Verhältnis von Realamplitude zu Referenzamplitude den Schwellwert unterschreitet (was z.B. auch bei Verlust des systemeigenen Reflektors auftreten kann)
und zugleich
2. Bereiche des Realsignals mit Laufzeiten unterhalb der Referenzlaufzeit einen von weichzielspezifischen Standardformen abweichenden Amplitudenverlauf aufweisen,
wird ein Schalt- und/oder Warnsignal mit der Kennung "Meßstörung" abgeleitet.

Gibt das Meßsystem weder eine Warnung mit der Kennung "Sichtweitenunterschreitung" noch die Kennung "Meßstörung" an, ist das Meßsystem intakt und die reale Sichtweite entspricht der durch den Schwellwert vorgegebenen Soll-Sichtweite. Bei geeigneter Wahl des Schwellwertes kann die Soll-Sichtweite gleich der Referenzentfernung sein.

Vorteilhafte Weiterbildungen des Verfahrens ergeben sich durch eine Differenzierung der möglichen Meßstörungen.

So besteht z.B. die Möglichkeit, daß ein Hindernis, also ein zusätzlicher Reflektor in Form von z.B. Wildtieren, Passanten, liegengebliebenen Fahrzeugen usw. in den Meßstrahlengang gelangt. Dies hat einen zusätzlichen hartzielspezifischen Amplitudenverlauf in einem Bereich des Realsignals mit Laufzeiten unterhalb der Referenzlaufzeit zur Folge. Gleichzeitig wird die Realamplitude, also der Reflex des systemeigenen Reflektors, geschwächt. Bei völliger Abdeckung des Reflektors wird die Realamplitude auf Null geschwächt. Daher wird in einer vorteilhaften Weiterbildung des Verfahrens für den Fall, daß
1. das Verhältnis von Realamplitude zu Referenzamplitude den Schwellwert unterschreitet
und zugleich
2. in Bereichen des Realsignals mit Laufzeiten unterhalb der Referenzlaufzeit ein hartzielspezifischer Amplitudenverlauf vorliegt,
ein Schalt- und/oder Warnsignal mit der Kennung "Hindernis" abgegeben.

Eine weitere mögliche Meßstörung besteht im Verlust des Reflektors, wenn z.B. der anvisierte Straßenbegrenzungspfosten abgebrochen wurde. Dies führt dazu, daß der ausgesendete Meßpuls nicht oder aus einer Distanz außerhalb der Referenzentfernung zum Entfernungsmesser zurückkehrt. Zusätzliche Amplitudenanteile in Bereichen des Realsignals mit Laufzeiten unterhalb der Referenzlaufzeit treten dann nicht auf. Daher wird in einer weiteren Variante des Verfahrens für den Fall, daß alle Empfangssignale mit Laufzeiten unterhalb und gleich der Referenzlaufzeit gleich einem vorher festgelegten Nullsignal sind, ein Schalt- und/oder Warnsignal mit der Kennung "Reflektorverlust" abgegeben.

Dieses Nullsignal wird durch eine beliebig gewählte maximale Amplitudenhöhe oberhalb des Rauschpegels festgelegt und definiert damit auch eine Standardform. Man kann sich dabei auf statistische Schwellen beziehen. Z. B. kann die n-fache Standardabweichung der Rauschverteilung als maximale Amplitudenhöhe gewählt werden. Liegen die Signalspitzen des Realsignals über dieser maximalen Amplitudenhöhe oberhalb des Rauschpegels, werden das Realsignal und das Nullsignal als ungleich erkannt.

Eine typische und häufige Meßstörung besteht in einer Abschwächung der Realamplitude durch eine Verschmutzung der Außenflächen des Entfernungsmessers und des Reflektors. Dabei treten im Gegensatz zum Fall "Hindernis" aus Distanzen unterhalb der Referenzentfernung keine zusätzlichen Reflexe und damit Amplitudenanteile im Realsignal auf. Es wird daher in einer geeigneten Weiterbildung des Verfahrens für den Fall, daß
1. das Verhältnis von Realamplitude zu Referenzamplitude den Schwellwert unterschreitet
und zugleich
2. das Realsignal in allen Bereichen mit Laufzeiten unterhalb der Referenzlaufzeit gleich einem vorher festgelegten Nullsignal ist,
ein Schalt- und/oder Warnsignal mit der Kennung "Verschmutzung" abgegeben.

Eine andere Weiterbildung des Verfahrens kann zur aktiven Verkehrsflußsteuerung eingesetzt werden, indem die Meßanordnung in der Nähe eines eine Geschwindigkeitsbegrenzung anzeigenden Verkehrsschildes angeordnet wird. Die Referenzentfernung wird dabei entsprechend der Geschwindigkeitsbegrenzung und der dadurch repräsentierten Mindestsichtweite gewählt. Bei Vorliegen einer Sichtweitenunterschreitung wird das Verkehrsschild eingeschaltet und damit der Verkehrsfluß aktiv gesteuert.

Weitere Weiterbildungen des vorgenannten Verfahrens ergeben sich aus der Überlegung, das Verfahren für mehrere Sichtweiten durchzuführen und mit einem in der Nähe der Meßanordnung angeordneten, umschaltbaren, eine Geschwindigkeitsbegrenzung anzeigenden Verkehrsschild zu kombinieren, welches jeweils die der aktuell ermittelten Sichtweite entsprechende Geschwindigkeitsbegrenzung anzeigt. Zur Überprüfung der verschiedenen Sichtweiten gibt es verschiedene Möglichkeiten.

Eine Variante besteht darin, mehrere Reflektoren in gestaffelten Abständen aufzustellen, die verschiedenen Sichtweiten entsprechen. Eine Verwendung der bereits vorhandenen, in regelmäßigen Abständen aufgestellten Straßenbegrenzungspfosten als Reflektoren ist möglich und vorteilhaft.

Zunächst wird für jeden Reflektor eine Referenzmessung durchgeführt, d. h. die Referenzlaufzeit und Referenzamplitude bestimmt. Dann werden die Verfahrensschritte c) bis g) des Anspruchs 1 für jeden Reflektor einzeln unter Vernachlässigung der Referenzlaufzeiten der anderen Reflektoren durchgeführt. Wird eine Sichtweitenunterschreitung festgestellt, wird die Geschwindigkeitsbegrenzung oder ein entsprechender Warnhinweis eingeschaltet, die dem Reflektor mit dem Abstand entsprechend der geringsten unterschrittenen Sichtweite zugeordnet ist.

Eine zweite Variante des vorgenannten Verfahrens ergibt sich durch Anordnung mehrerer Reflektoren mit unterschiedlichen Reflektanzen in demselben Abstand von der Meßanordnung. Dabei erhält man die jeweilige Reflektanz aus dem Produkt aus Reflektorfläche und Reflexionsgrad. Die verschiedenen Reflektanzen werden entsprechend gestaffelten Sichtweiten gewählt. Die Reflektoren werden nacheinander in den Meßstrahlengang gebracht oder z.B. durch Entfernen einer Abdeckung aktiviert. Für jeden einzelnen Reflektor werden die Verfahrensschritte des Anspruchs 1 durchgeführt. Bei Nachweis einer Sichtweitenunterschreitung wird für den Reflektor, dessen Reflektanz der geringsten unterschrittenen Sichtweite entspricht, die zugehörige Geschwindigkeitsbegrenzung oder ein entsprechender Warnhinweis eingeschaltet.

Eine dritte Variante zu den beiden vorgenannten Verfahren ergibt sich durch Durchführung des Verfahrens nach Anspruch 1 mit mehreren Schwellwerten, die gestaffelten Sichtweiten entsprechen. Für denjenigen Schwellwert, der der geringsten unterschrittenen Sichtweite entspricht, wird dann die zugehörige Geschwindigkeitsbegrenzung oder ein entsprechender Warnhinweis eingeschaltet.

Das erfindungsgemäße Verfahren und die erfindungsgemäße Vorrichtung werden nachfolgend anhand eines in der Zeichnung schematisch dargestellten Ausführungsbeispiels für eine geeignete Vorrichtung zur relativen Sichtweitenbestimmung beschrieben.

Es zeigen:

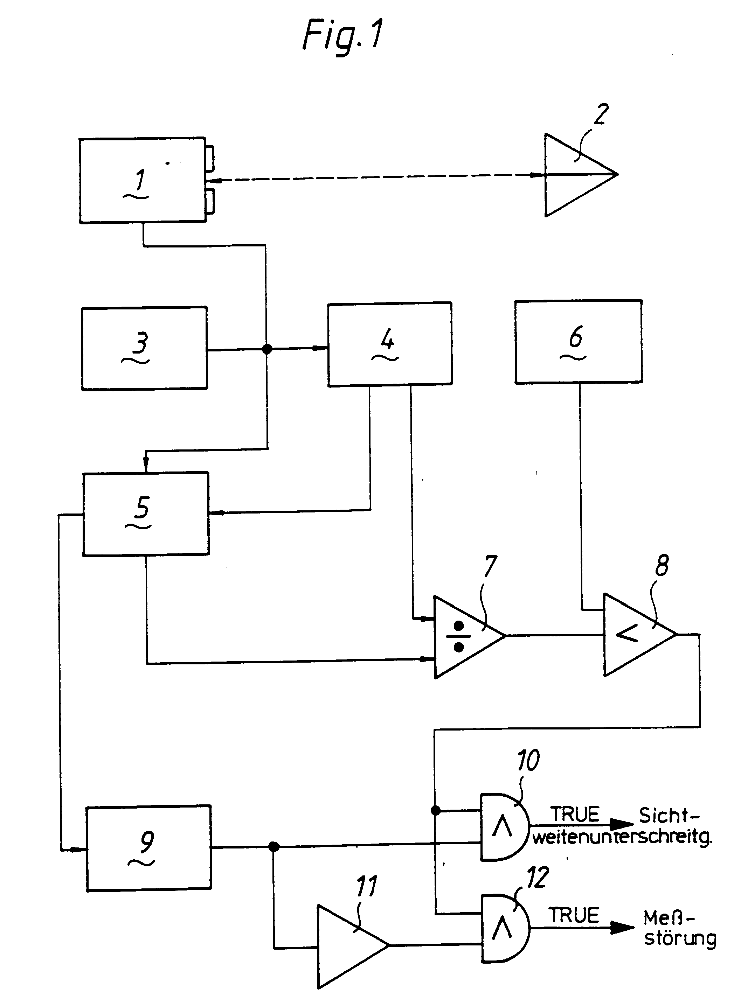

- Fig. 1:: ein Ausführungsbeispiel für eine erfindungsgemäße Vorrichtung;
- Fig. 2:: ein Realsignal bei guter Sicht;
- Fig. 3:: ein Realsignal bei Vorliegen einer Sichtweitenunterschreitung durch aufgetretenen Nebel;
- Fig. 4:: ein Realsignal bei Vorliegen einer Meßstörung aufgrund eines Hindernisses innerhalb der Referenzentfernung.

Ein Entfernungsmesser 1 wird in der Referenzentfernung zum Reflektor 2 angebracht. Es ist vorteilhaft, alle Vorrichtungselemente mit Ausnahme des Reflektors 2 in einem Gehäuse zu integrieren. Dann kann dieser integrierte Vorrichtungsteil in Position zu einem beliebigen Reflektor (z.B. Straßenbegrenzungspfosten, Gebäude usw.) gebracht werden.

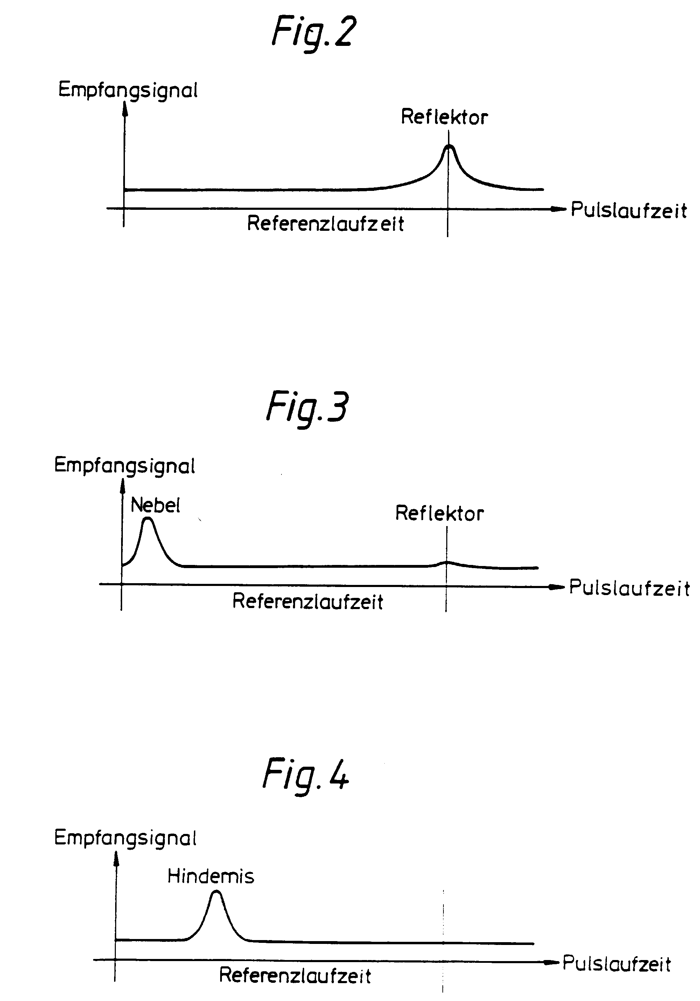

Zunächst wird eine durch eine Steuerelektronik 3 gesteuerte Referenzmessung unter Idealbedingungen durchgeführt. Im Entfernungsmesser 1 werden die Referenzlaufzeit und die Referenzamplitude gemessen. Beide werden in einem Referenzspeicher 4 abgespeichert. Während der Referenzmessung erhält man Empfangssignale, wie sie in Fig. 2 dargestellt sind.

Dann wird auf Veranlassung der Steuerelektronik 3 ein Realsignal gemessen und in einem Realspeicher 5 abgespeichert. Für die Abfrage der Realamplitude aus dem Realspeicher 5 wird diesem vom Referenzspeicher 4 der Wert der Referenzlaufzeit zugeführt.

Die vom Realspeicher 5 abgefragte Realamplitude wird auf den Dividenden-Eingang eines Dividierers 7 geführt. Die vom Referenzspeicher 4 abgefragte Referenzamplitude wird auf den Divisor-Eingang des Dividierers 7 geführt.

Das Ausgangssignal des Dividierers 7 wird auf den ersten Eingang eines Komparators 8 geführt. Auf den zweiten Eingang des Komparators 8 wird ein von einem Schwellwert-Speicher 6 abgefragter, vor Meßbeginn eingelesener, Schwellwert geführt. Für den Fall, daß das Verhältnis von Realamplitude zu Referenzamplitude den Schwellwert unterschreitet, liefert der Komparator 8 an seinem Ausgang ein TRUE-Signal. In diesem Fall ist die erste Bedingung für eine Sichtweitenunterschreitung oder eine Meßstörung erfüllt.

Zusätzlich wird vom Realspeicher 5 das Realsignal abgefragt und einem Signalform-Komparator 9 zugeführt. In ihm ist intern eine weichzielspezifische Standardform abgelegt. Bei Formübereinstimmung zwischen Standardform und Bereichen des Realsignals liefert der Signalform-Komparator 9 an seinem Ausgang ein TRUE-Signal.

Das Ausgangssignal des Signalform-Komparators 9 wird sowohl auf den ersten Eingang eines ersten UND-Gatters 10 geführt als auch auf den Eingang eines Negierers 11. Auf den zweiten Eingang des ersten UND-Gatters 10 wird das Ausgangssignal des Komparators 8 geführt. Erhält dieses erste UND-Gatter 10 auf beiden Eingängen ein TRUE-Signal, liefert es an seinem Ausgang auch ein TRUE-Signal und löst damit ein Schalt- und/oder Warnsignal mit der Kennung "Sichtweitenunterschreitung" aus. Dies entspricht der Situation, die in Fig. 3 wiedergegeben wird. Hier zeigt das dargestellte Realsignal eine gegenüber der Referenzamplitude deutlich abgeschwächte Realamplitude. Zusätzlich tritt jedoch ein weichzielspezifischer Amplitudenverlauf für Bereiche des Realsignals mit Laufzeiten unterhalb der Referenzlaufzeit auf. In diesem Beispiel liegt Nebel vor, der durch die exponentiell abfallende Flanke im Signalverlauf gekennzeichnet ist.

Das Ausgangssignal des Negierers 11 wird auf den ersten Eingang eines zweiten UND-Gatters 12 geführt. Auf dessen zweiten Eingang wird das Ausgangssignal des Komparators 8 geführt. Erhalten beide Eingänge ein TRUE-Signal, gibt das zweite UND-Gatter 12 an seinem Ausgang ein TRUE-Signal aus und löst damit ein Schalt- und-/oder Warnsignal mit der Kennung "Meßstörung" aus. Fig. 4 zeigt den Verlauf des Realsignals in einem solchen Fall. In diesem Beispiel ist ein Hindernis in die Referenzstrecke gelangt und hat den Reflektor vollständig verdeckt. Daher ist die Realamplitude gleich Null. Gleichzeitig tritt im Realsignal ein hartzielspezifischer Amplitudenverlauf auf.

### BEZUGSZEICHENLISTE

- 1: Pulslaufzeit-Entfernungsmesser
- 2: Reflektor
- 3: Steuerelektronik
- 4: Referenzspeicher
- 5: Realspeicher
- 6: Schwellwertspeicher
- 7: Dividierer
- 8: Komparator
- 9: Signalform-Komparator
- 10: erstes UND-Gatter
- 11: Negierer
- 12: zweites UND-Gatter

## Patentansprüche

1. Verfahren zur relativen Sichtweitenbestimmung mit den Verfahrensschritten:
a) Messen und Speichern einer Referenzlaufzeit eines Meßpulses über eine Referenzentfernung zwischen einem Pulslaufzeit-Entfernungsmesser und einem beliebigen Reflektor unter Idealbedingungen,
b) Messen und Speichern einer der Referenzlaufzeit zugeordneten Referenzamplitude eines von dem Reflektor reflektierten Meßpulses unter Idealbedingungen,
c) Messen und Speichern eines Realsignals, das gleich dem zeitlichen Verlauf der Empfangssignale des Pulslaufzeit-Entfernungsmessers unter Realbedingungen ist,
d) Bestimmen einer Realamplitude, die gleich der Amplitude des zeitlichen Anteils des Realsignals mit einer Laufzeit gleich der Referenzlaufzeit ist,
e) Ermittlung des Verhältnisses von Realamplitude zu Referenzamplitude und Vergleich des Verhältnisses mit einem von der zu bestimmenden Sichtweite abhängigen Schwellwert,
f) Vergleich der Signalform des Realsignals mit Standardformen für die Sichtweite beeinflussende Zustände der Meßstrecke bis zum Reflektor und
g) Verknüpfung der Vergleichsergebnisse zur Erzeugung eines Schalt- und/oder Warnsignals für den Fall einer Sichtweitenunterschreitung oder einer Meßstörung.

2. Verfahren nach Anspruch 1, **dadurch gekennzeichnet,**
**daß**, ein Schalt- und/oder Warnsignal mit der Kennung "Sichtweitenunterschreitung" erzeugt wird,
wenn
das Verhältnis von Realamplitude zu Referenzamplitude den Schwellwert unterschreitet
und zugleich
in Bereichen des Realsignals mit einer Laufzeit unterhalb der Referenzlaufzeit eine mit weichzielspezifischen Standardformen übereinstimmende Signalform vorliegt.

3. Verfahren nach Anspruch 1, **dadurch gekennzeichnet,**
**daß** ein Schalt- und/oder Warnsignal mit der Kennung "Meßstörung" erzeugt wird,
wenn
das Verhältnis von Realamplitude zu Referenzamplitude den Schwellwert unterschreitet
und zugleich
in Bereichen des Realsignals mit einer Laufzeit unterhalb der Referenzlaufzeit eine von weichzielspezifischen Standardformen abweichende Signalform vorliegt.

4. Verfahren nach Anspruch 1, **dadurch gekennzeichnet,**
**daß** ein Schalt- und/oder Warnsignal mit der Kennung "Hindernis" erzeugt wird,
wenn
das Verhältnis von Realamplitude zu Referenzamplitude den Schwellwert unterschreitet
und zugleich
in Bereichen des Realsignals mit einer Laufzeit unterhalb der Referenzlaufzeit eine mit hartzielspezifischen Standardformen übereinstimmende Signalform vorliegt.

5. Verfahren nach Anspruch 1, **dadurch gekennzeichnet,**
**daß** ein Schalt- und/oder Warnsignal mit der Kennung "Reflektorverlust" erzeugt wird, wenn in allen Bereichen des Realsignals mit einer Laufzeit unterhalb und gleich der Referenzlaufzeit eine Signalform gleich einer Standardform für ein Nullsignal vorliegt.

6. Verfahren nach Anspruch 1, **dadurch gekennzeichnet**,
**daß** ein Schalt- und/oder Warnsignal mit der Kennung "Verschmutzung" erzeugt wird,
wenn
das Verhältnis von Realamplitude zu Referenzamplitude den Schwellwert unterschreitet
und zugleich
in allen Bereichen des Realsignals mit einer Laufzeit unterhalb der Referenzlaufzeit eine Signalform gleich einer Standardform für ein Nullsignal vorliegt.

7. Verfahren nach Anspruch 1, **dadurch gekennzeichnet**,
**daß** in der Nähe der Meßanordnung ein eine Geschwindigkeitsbegrenzung entsprechend der zu bestimmenden Sichtweite anzeigendes, einschaltbares Verkehrsschild montiert wird, welches nur beim Ableiten einer Warnung über eine Sichtweitenunterschreitung eingeschaltet wird.

8. Verfahren nach Anspruch 1, **dadurch gekennzeichnet,**
**daß** in der Nähe der Meßanordnung ein eine Geschwindigkeitsbegrenzung entsprechend der zu bestimmenden Sichtweite anzeigendes, umschaltbares Verkehrschild montiert wird,
**daß** n Reflektoren in verschiedenen Sichtweiten entsprechenden, gestaffelten Abständen aufgestellt werden,
**daß** für jeden Reflektor die zugehörige Referenzlaufzeit und Referenzamplitude entsprechend den Verfahrensschritten a) und b) des Anspruchs 1 gemessen und gespeichert werden,
**daß** die Verfahrensschritte c) bis g) für jeden Reflektor unter Vernachlässigung der Referenzlaufzeiten der anderen Reflektoren durchgeführt werden und
**daß** für den Reflektor, der sich zur Meßanordnung in dem Abstand entsprechend der geringsten unterschrittenen Sichtweite befindet, die zugehörige Geschwindigkeitsbegrenzung eingeschaltet wird oder ein entsprechender Warnhinweis gegeben wird.

9. Verfahren nach Anspruch 1, **dadurch gekennzeichnet,**
**daß** in der Nähe der Meßanordnung eine Geschwindigkeitsbegrenzung entsprechend der zu bestimmenden Sichtweite anzeigendes, umschaltbares Verkehrschild montiert wird,
**daß** n Reflektoren mit unterschiedlichen Sichtweiten entsprechenden Reflektanzen in demselben Abstand von der Meßanordnung aufgestellt werden,
**daß** die Reflektoren wahlweise einzeln im Strahlengang der Meßanordnung aktiviert werden,
**daß** für jeden Reflektor die Verfahrensschritte a) bis g) des Anspruchs 1 durchgeführt werden,
**daß** für den Reflektor, dessen Reflektanz der geringsten unterschrittenen Sichtweite entspricht, die zugehörige Geschwindigkeitsbegrenzung angeschaltet oder ein entsprechender Warnhinweis gegeben wird.

10. Verfahren nach Anspruch 1, **dadurch gekennzeichnet,**
**daß** in der Nähe der Meßanordnung ein die Geschwindigkeit entsprechend der Referenzentfernung begrenzendes, umschaltbares Verkehrschild montiert wird,
**daß** die Verfahrensschritte e) bis g) des Anspruchs 1 mit n, verschiedenen Sichtweiten entsprechenden Schwellwerten durchgeführt wird und
**daß** für denjenigen Schwellwert, der der geringsten unterschrittenen Sichtweite entspricht, die entsprechende Geschwindigkeitsbegrenzung eingeschaltet oder ein entsprechender Warnhinweis gegeben wird.

11. Vorrichtung zur Durchführung des Verfahrens zur relativen Sichtweitenbestimmung, **mit**
a) einem nach dem Pulslaufzeitprinzip arbeitenden Entfernungsmesser (1),
b) einem beliebigen Reflektor (2) in einer Referenzentfernung zu dem Entfernungsmesser (1),
c) einer Steuerelektronik (3) zur Ablaufsteuerung der Verfahrensschritte mit einem bidirektionalen Ein/Ausgang,
d) einem Referenzspeicher (4) zum Speichern einer Referenzamplitude und einer Referenzlaufzeit mit einem Eingang, der mit der Steuerelektronik (3) und dem Entfernungsmesser (1) verbunden ist, ferner einem ersten Ausgang zur Ausgabe der Referenzlaufzeit und einem zweiten Ausgang zur Ausgabe der Referenzamplitude,
e) einem Realspeicher (5) zur Speicherung eines Realsignals und einer der Referenzlaufzeit zugeordneten Realamplitude mit einem ersten Eingang, der mit der Steuerelektronik (3) und dem Entfernungsmesser (1) verbunden ist, einem zweiten Eingang zur Aufnahme der vom Referenzspeicher (4) gelieferten Referenzlaufzeit, ferner einen ersten Ausgang zur Abgabe des Realsignals und einem zweiten Ausgang zur Abgabe der Realamplitude,
f) einem Schwellwertspeicher (6),
g) einem Dividierer (7) mit zwei Eingängen und einem Ausgang, auf dessen Divisor-Eingang die vom Referenzspeicher (4) gelieferte Referenzamplitude geführt wird und auf dessen Dividenden-Eingang die vom Realspeicher (5) gelieferte Realamplitude geführt wird,
h) einem Komparator (8) mit zwei Eingängen und einem Ausgang, auf dessen ersten Eingang das Ausgangssignal des Dividierers (7) geführt wird und auf dessen zweiten Eingang der vom Schwellwert-Speicher (6) gelieferte Schwellwert geführt wird und dessen Ausgang für den Fall, daß das Verhältnis von Realamplitude zu Referenzamplitude den Schwellwert unterschreitet, ein TRUE-Signal liefert,
i) einem Signalform-Komparator (9) mit einer intern abgelegten Standardform, die einem weichzielspezifischen Amplitudenverlauf der Empfangssignale des Entfernungsmessers (1) entspricht, und einem Eingang, über den das vom Real speicher (5) abgefragte Realsignal zugeführt wird, und einem Ausgang, der bei Formübereinstimmung zwischen Standardform und Bereichen des Realsignals ein TRUE-Signal liefert,
j) einem ersten UND-Gatter (10), dessen erstem Eingang das Ausgangssignal des Signalform-Komparators (9) und dessen zweitem Eingang das Ausgangssignal des Komparators (8) zugeführt wird und dessen Ausgangssignal im Fall "TRUE" ein Schalt- und/oder Warnsignal mit der Kennung "Sichtweitenunterschreitung" auslöst,
k) einem Negierer (11), auf dessen Eingang das Ausgangssignal des Signalform-Komparators (9) geführt wird, und
l) einem zweiten UND-Gatter (12), dessen erstem Eingang das Ausgangssignal des Negierers (11) und dessen zweitem Eingang das Ausgangssignal des Komparators (8) zugeführt wird und dessen Ausgangssignal im Fall "TRUE" ein Schalt- und/oder Warnsignal mit der Kennung "Meßstörung" auslöst.

12. Vorrichtung nach Anspruch 11, **gekennzeichnet durch**
a) einen zweiten Signalform-Komparator mit einer intern abgelegten Standardform, die einem hartzielspezifischen Amplitudenverlauf der Empfangssignale des Entfernungsmessers (1) entspricht, und einem Eingang, über den das vom Realspeicher (5) abgefragte Realsignal zugeführt wird, und einem Ausgang, der bei Formübereinstimmung zwischen Standardform und Bereichen des Realsignals ein TRUE-Signal liefert, und
b) ein drittes UND-Gatter, dessen erstem Eingang das Ausgangssignal des zweiten Signalform-Komparators und dessen zweitem Eingang das Ausgangssignal des Komparators (8) zugeführt wird und dessen Ausgangssignal im Fall "TRUE" ein Schalt- und/oder Warnsignal mit der Kennung "Hindernis" auslöst.

13. Vorrichtung nach Anspruch 11, **gekennzeichnet durch**
a) einen zweiten Signalform-Komparator mit einer intern abgelegten Standardform, die gleich einem definierten Nullsignal ist, und einem Eingang, über den das vom Realspeicher (5) abgefragte Realsignal zugeführt wird, und einem Ausgang, der bei Formübereinstimmung zwischen Standardform und Realsignal ein TRUE-Signal liefert, und
b) ein drittes UND-Gatter, dessen erstem Eingang das Ausgangssignal des zweiten Signalform-Komparators und dessen zweitem Eingang das Ausgangssignal des Komparators (8) zugeführt wird und dessen Ausgangssignal im Fall "TRUE" ein Schalt- und/oder Warnsignal mit der Kennung "Verschmutzung" auslöst.

14. Vorrichtung nach Anspruch 11, **gekennzeichnet durch** einen zweiten Signalform-Komparator mit einer intern abgelegten Standardform, die gleich einem definierten Nullsignal ist, und einem Eingang, über den das vom Realspeicher (5) abgefragte Realsignal zugeführt wird, und einem Ausgang, der bei Formübereinstimmung zwischen Standardform und Realsignal ein TRUE-Signal liefert, welches dann ein Warn- und/oder Schaltsignal mit der Kennung "Reflektorverlust" auslöst.

## Claims

1. Method for relative visibility determination, with the method steps:
a) measuring and storing a reference transit time of a measurement pulse over a reference distance between a pulse transit time-distance measuring device and an arbitrary reflector under ideal conditions,
b) measuring and storing a reference amplitude, which is associated with the reference transit time, of a measurement pulse, which is reflected by the reflector, under ideal conditions,
c) measuring and storing an actual signal which is equal to the time course of the reception signal of the pulse transit time-distance measuring device under actual conditions,
d) determining an actual amplitude which is equal to the amplitude of the time component of the actual signal with a transit time equal to the reference transit time,
e) ascertaining the ratio of actual amplitude to reference amplitude and comparing the ratio with a threshold value dependent on the visibility to be determined,
f) comparing the signal shape of the actual signal with standard shapes for the states, which influence visibility, of the measurement path to the reflector, and
g) linking the comparison results for the generation of a switching and/or warning signal for the case of a falling below of visibility or a measurement disturbance.

2. Method according to claim 1, characterised thereby that a switching and/or warning signal is generated with the identification "falling below of visibility" when the ratio of actual amplitude to reference amplitude falls below the threshold value and at the same time a signal shape corresponding with standard shapes specific to soft target is present in ranges of the actual signal with a transit time below the reference transit time.

3. Method according to claim 1, characterised thereby that a switching and/or warning signal is generated with the identification "measurement disturbance" when the ratio of actual amplitude to reference amplitude falls below the threshold value and at the same time a signal shape deviating from standard shapes specific to soft target is present in the ranges of the actual signal with a transit time below the reference transit time.

4. Method according to claim 1, characterised thereby that a switching/or warning signal is generated with the identification "obstruction" when the ratio of actual amplitude to reference amplitude falls below the threshold value and at the same time a signal shape corresponding to standard shapes specific to hard target is present in the ranges of the actual signal with a transit time below the reference transit time.

5. Method according to claim 1, characterised thereby that a switching and/or warning signal is generated with the identification "reflector loss" when a signal shape equal to a standard shape for a zero signal is present in all ranges of the actual signal with a transit time below and equal to the reference transit time.

6. Method according to claim 1, characterised thereby that a switching and/or warning signal is generated with the identification "contamination" when the ratio of actual amplitude to reference amplitude falls below the threshold value and at the same time a signal shape equal to a standard shape for a zero signal is present in all ranges of the actual signal with a transit time below the reference transit time.

7. Method according to claim 1, characterised thereby that a traffic sign, which can be switched on, indicates a speed limitation corresponding to the visibility to be determined and is switched on only in the case of derivation of a warning about a falling below of visibility, is mounted in the proximity of the measuring arrangement.

8. Method according to claim 1, characterised thereby that a traffic sign, which can be switched over and indicates a speed limitation corresponding to the visibility to be determined, is mounted in the proximity of the measuring arrangement, that n reflectors are set up in staggered spacings corresponding to different visibilities, that for each relfector the associated reference transit time and reference amplitude corresponding to the method steps a) and b) of claim 1 are measured and stored, that the method steps c) to g) are carried out for each reflector while disregarding the reference transit times of the other reflectors, and that for the reflector, which is disposed at the spacing relative to the measuring arrangement corresponding to the lowest visibility fallen below, the associated speed limitation is switched on or a corresponding warning notice is given.

9. Method according to claim 1, characterised thereby that a traffic sign, which can be switched over and indicates a speed limitation corresponding to the visibility to be determined, is mounted in the proximity of the measuring arrangement, that n reflectors with reflectances corresponding to different visibilities are set up at the same spacing from the measuring arrangement, that the reflectors are activated selectably individually in the beam path of the measuring arrangement, that the method steps a) to g) of claim 1 are carried out for each reflector, and that for the reflector of which the reflectance corresponds to the lowest visibility fallen below, the associated speed limitation is connected or a corresponding warning notice is given.

10. Method according to claim 1, characterised thereby that a traffic sign, which can be switched over and limits the speed corresponding to the reference distance, is mounted in the proximity of the measuring arrangement, that the method steps e) to g) of claim 1 are carried out with threshold values corresponding to n different visibilities, and that for that threshold value which corresponds to the lowest visibility fallen below, the corresponding speed limitation is switched on or a corresponding warning notice is given.

11. Device for carrying out the method for relative visibility determination, comprising
a) a distance measuring device (1) operating according to the pulse transit time principle,
b) an arbitrary reflector (2) at a reference distance from the distance measuring device (1),
c) an electronic control device (3) for sequence control of the method steps, with a bidirectional input/output,
d) a reference value storage device (4) for the storage of a reference amplitude and a reference transit time, comprising an input, which is connected with the electronic control device (3) and the distance measuring device (1), further a first output for issue of the reference transit time and a second output for issue of the reference amplitude,
e) an actual value storage device (5) for storage of an actual signal and an actual amplitude associated with the reference transit time, comprising a first input, which is connected with the electronic control device (3) and the distance measuring device (1), a second input for reception of the reference transit time delivered by the reference value storage device (4), further a first output for issue of the actual signal and a second output for issue of the actual amplitude,
f) a threshold value storage device (6),
g) a divider (7) with two inputs and an output, to the divisor input of which is conducted the reference amplitude delivered by the reference value storage device (4) and to the divident input of which is conducted the actual amplitude delivered by the actual value storage device (5),
h) a comparator (8) with two inputs and an output, to the first input of which is conducted the output signal of the divider (7) and to the second input of which is conducted the threshold value delivered by the threshold value storage device (6) and the output of which delivers a 'TRUE' signal for the case that the ratio of actual amplitude to reference amplitude falls below the threshold value,
i) a signal shape comparator (9) with an internally filed standard shape, which corresponds to an amplitude course, which is specific to soft target, of the reception signals of the distance measuring device (1), and an input by way of which the actual signal interrogated from the actual value storage device (5) is fed, and an output which delivers a 'TRUE' signal in the case of shape correspondence between standard shape and ranges of the actual signal,
j) a first AND gate (10), to the first input of which is fed the output signal of the signal shape comparator (9) and to the second input of which the output signal of the comparator (8) is fed, and the output signal of which in the case of 'TRUE' triggers a switching and/or warning signal with the identification "visibility fallen below",
k) a negating device (11), to the input of which is conducted the output signal of the signal shape comparator (9), and
l) a second AND gate (12), to the first input of which is fed the output signal of the negating device (11) and to the second input of which is fed the output signal of the comparator (8) and the output signal of which in the case of 'TRUE' triggers a switching and/or warning signal with the identification "measurement disturbance".

12. Device according to claim 11, characterised by
a) a second signal shape comparator with an internally filed standard shape, which corresponds to an amplitude course, which is specific to hard target, of the reception signals of the distance measuring device (1), and an input, by way of which the actual signal interrogated from the actual value storage deive (5) is fed, and an output, which delivers a 'TRUE' signal in the case of shape correspondence between standard shape and ranges of the actual signal, and
b) a third AND gate, to the first input of which is fed the output signal of the second signal shape comparator and to the second input of which is fed the output signal of the comparator (8) and the output signal of which in the case of 'TRUE' triggers a switching and/or warning signal with the identification "obstruction".

13. Device according to claim 11, characterised by
a) a second signal shape comparator with an internally filed standard shape, which is equal to a defined zero signal, and an input, by way of which the actual signal interrogated from the actual value storage device (5) is fed, and an output, which delivers a 'TRUE' signal in the case of shape correspondence between standard shape and actual signal, and
b) a third AND gate, to the first input ofwhich is fed the output signal of the second signal shape comparator and to the second input of which is fed the output signal of the comparator (8) and the output signal of which in the case of 'TRUE' triggers a switching and/or warning signal with the identification "contamination".

14. Device according to claim 11, characterised by a second signal shape comparator with an internally filed standard shape, which is equal to a defined zero signal, and an input, by way of which the actual signal interrogated from the actual value storage device (5) is fed, and an output, which in the case of shape correspondence between standard shape and actual signal delivers a 'TRUE' signal which then triggers a warning and/or switching signal with the identification "reflector loss".

## Revendications

1. Procédé pour la détermination de la distance de visibilité relative présentant les étapes de
a) Mesure et mémorisation d'un temps de parcours de référence d'une impulsion de mesure sur un éloignement de référence entre un appareil de mesure d'éloignement-temps de parcours des impulsions et un réflecteur quelconque en conditions idéales,
b) Mesure et mémorisation d'une amplitude de référence affectée au temps de parcours de référence d'une impulsion de mesure réfléchie par le réflecteur en conditions idéales,
c) Mesure et mémorisation d'un signal réel qui est égal au tracé dans le temps des signaux de réception de l'appareil de mesure d'éloignement- temps de parcours des impulsions en conditions réelles,
d) Détermination d'une amplitude réelle qui est égale à l'amplitude de la partie temporelle du signal réel avec un temps de parcours égal au temps de parcours de référence,
e) Obtention du rapport de l'amplitude réelle à l'amplitude de référence et comparaison du rapport avec une valeur de seuil dépendant de la distance de visibilité à déterminer,
f) Comparaison de la forme du signal réel à des formes standards pour des états du tronçon de mesure influençant la distance de visibilité jusqu'au réflecteur et
g) Combinaison des résultats de la comparaison pour la production d'un signal d'enclenchement et/ou d'alarme dans le cas du passage en dessous de la distance de visibilité ou bien d'une perturbation de la mesure.

2. Procédé selon la revendication 1, caractérisé en ce qu'un signal de déclenchement et/ou d'alarme ayant pour caractéristique "passage en dessous de la distance de visibilité" est produit quand
le rapport de l'amplitude réelle à l'amplitude de référence passe en dessous de la valeur de seuil, et en même temps
dans des zones du signal réel avec un temps de parcours en dessous du temps de parcours de référence, il y a une forme du signal en concordance avec des formes standards spécifiques d'une cible molle.

3. Procédé selon la revendication 1 caractérisé en ce qu'un signal de déclenchement et/ou d'alarme ayant pour caractéristique "perturbation de la mesure" est produit quand
le rapport de l'amplitude réelle à l'amplitude de référence passe en dessous de la valeur de seuil et
et en même temps
dans des zones du signal réel avec un temps de parcours en dessous du temps de parcours de référence, il y a une forme du signal s'écartant des formes standards spécifiques d'une cible molle.

4. Procédé selon la revendication 1 caractérisé en ce qu'un signal de déclenchement et/ou d'alarme ayant pour caractéristique "obstacle" est produit quand
le rapport de l'amplitude réelle à l'amplitude de référence passe en dessous de la valeur de seuil
en même temps
dans des zones du signal réel avec un temps de parcours en dessous du temps de parcours de référence, il y a une forme du signal en concordance avec des formes standards spécifiques d'une cible dure.

5. Procédé selon la revendication 1, caractérisé en ce qu'un signal de déclenchement et/ou d'alarme ayant pour caractéristique "perte du réflecteur" est produit quand dans toutes les zones du signal réel avec un temps de parcours en dessous de et égal au temps de parcours de référence, il y a une forme de signal égale à une forme de référence pour un signal de sortie zéro.

6. Procédé selon la revendication 1, caractérisé en ce qu'un signal de déclenchement et/ou d'alarme ayant pour caractéristique "encrassement" est produit
quand
le rapport de l'amplitude réelle à l'amplitude de référence passe en dessous de la valeur de seuil, et
en même temps
dans toutes les zones du signal réel avec un temps de parcours en dessous du temps de parcours de référence, il y a une forme de signal égale à une forme standard pour un signal de sortie zéro.

7. Procédé selon la revendication 1, caractérisé en ce qu'à proximité de l'agencement de mesure est monté un panneau de circulation pouvant être mis en circuit, indiquant la condition de vitesse correspondant à la distance de visibilité déterminée, lequel n'est mis en circuit qu'au départ d'une alarme concernant un passage en dessous de la distance de visibilité.

8. Procédé selon la revendication 1, caractérisé en ce qu'à proximité de l'agencement de mesure est monté un panneau de circulation commutable indiquant la limite de vitesse correspondant à la distance de visibilité à déterminer, en ce que des réflecteurs sont placés à diverses distances échelonnées correspondant à des distances de visibilité, et
en ce que pour chaque réflecteur, le temps de parcours de référence correspondant et l'amplitude de référence sont mesurés selon les étapes de procédé a) et b) de la revendication 1 et mémorisés, en ce que les étapes de procédé c) à g) pour chaque réflecteur sont accomplies en négligeant les temps de parcours de référence des autres réflecteurs et en ce que pour le réflecteur qui se trouve par rapport à l'agencement de mesure à la distance correspondant à la plus petite distance de visibilité sous laquelle on est passé, la limite correspondante de vitesse de mise en circuit ou bien l'avertissement correspondant est donné.

9. Procédé selon la revendication 1, caractérisé en ce qu'à proximité de l'agencement de mesure est monté un panneau de circulation commutable indiquant une limitation de vitesse correspondant à la distance de visibilité à déterminer,
en ce des réflecteurs avec des réflectances correspondant aux diverses distances de visibilité sont placés à la même distance de l'agencement de mesure,
en ce que les réflecteurs sont activés au choix, individuellement, dans le trajet des rayons de l'agencement de mesure,
en ce que, pour chaque réflecteur, les étapes de procédé a) à g) de la revendication 1 sont accomplies
en ce que pour le réflecteur dont la réflectance correspond à la distance de visibilité sous laquelle on est passé la plus minime, la limite de vitesse correspondante est mis en circuit ou bien un avertissement correspondant est donné.

10. Procédé selon la revendication 1, caractérisé en ce que
à proximité de l'agencement de mesure est monté un panneau de circulation commutable, délimitant la vitesse correspondant à l'éloignement de référence
en ce que les étapes de procédé e) à g) de la revendication 1 sont accomplies avec des valeurs de seuil correspondant à différentes distances de visibilité et
en ce que pour chaque valeur de seuil qui correspond à la distance de visibilité plus basse sous laquelle on est passé, la limite de vitesse correspondante est mise en circuit ou bien un avertissement correspondant est donné.

11. Dispositif pour la mise en oeuvre du procédé pour la détermination de la distance de visibilité relative avec
a) un appareil de mesure d'éloignement (1) fonctionnant selon le principe du temps de parcours des impulsions,
b) un réflecteur quelconque (2) à un éloignement de référence par rapport à l'appareil de mesure d'éloignement (1),
c) une électronique de commande (3) pour la commande du déroulement des étapes du procédé avec une entrée et/ou sortie bidirectionnelles,
d) une mémoire de référence (4) pour la mémorisation d'une amplitude de référence et d'un temps de parcours de référence avec une entrée qui est reliée à l'électronique de commande (3) et à l'appareil de mesure d'éloignement (1), de plus une première sortie pour donner le temps de parcours de référence et une seconde sortie pour donner l'amplitude de référence,
e) une mémoire réelle (5) pour la mémorisation d'un signal réel et d'une amplitude réelle affectée au temps de parcours de référence avec une première entrée qui est reliée à l'électronique de commande (3) et à l'appareil de mesure d'éloignement (1), une seconde entrée pour la réception du temps de parcours de référence donné par la mémoire de référence (4) et de plus une première sortie pour donner le signal réel et une seconde sortie pour donner l'amplitude réelle,
f) une mémoire de valeurs de seuil (6),
g) un diviseur (7) avec deux entrées et une sortie, à l'entrée de diviseur duquel est conduite l'amplitude de référence donnée par la mémoire de référence (4) et à l'entrée de dividende duquel est conduite l'amplitude réelle fournie par la mémoire réelle (5),
h) un comparateur (8) avec deux entrées et une sortie à la première entrée duquel est conduit le signal à la sortie du diviseur (7) et à la seconde entrée duquel est conduite la valeur de seuil fournie par la mémoire de valeurs de seuil (6) et dont la sortie dans le cas où le rapport de l'amplitude réelle à l'amplitude de référence passe en dessous de la valeur de seuil, fournit un signal VRAI,
i) un comparateur des formes des signaux (9) avec une forme standard déposée intérieurement, qui correspond à un tracé d'amplitude spécifique d'une cible molle des signaux de réception de l'appareil de mesure d'éloignement (1) et une sortie par laquelle est conduit le signal réel extrait de la mémoire de signaux réels (5), et une sortie qui délivre, lors d'une correspondance de forme entre la forme standard et des zones du signal réel, un signal VRAI,
j) une première porte ET (10), dont la première entrée reçoit un signal à la sortie du comparateur des formes des signaux (9) et dont la seconde entrée reçoit le signal à la sortie du comparateur (8) et dont le signal de sortie dans le cas "VRAI" déclenche un signal de déclenchement et/ou d'alarme ayant pour caractéristique "dépassement par en dessous" de la distance de visibilité,
k) un élément NON (11) à l'entrée duquel est conduit le signal à la sortie du comparateur (9) des formes des signaux, et
l) une seconde porte ET (12), dont la première entrée reçoit le signal à la sortie de l'élément (11) et dont la seconde sortie reçoit le signal à la sortie du comparateur (8) et dont le signal de sortie dans le cas de "VRAI" déclenche un signal de déclenchement et/ou d'alerte pour caractéristique "perturbation dans la mesure".

12. Dispositif selon la revendication 11, caractérisé en ce que
a) un second comparateur des formes des signaux avec une forme standard déposée intérieurement qui correspond à un tracé d'amplitude spécifique d'une cible dure des signaux de réception de l'appareil de mesure d'éloignement et une entrée par laquelle est conduit le signal réel extrait de la mémoire réelle (5) et une sortie qui, pour une correspondance des formes entre la forme standard et des zones du signal réel, délivre un signal VRAI, et
b) une troisième porte ET dont la première entrée reçoit le signal à la sortie du second comparateur des forme de signaux et dont la seconde entrée reçoit le signal à la sortie du comparateur (8) et dont le signal de sortie dans le cas "VRAI" déclenche un signal de déclenchement et/ou d'alarme ayant pour caractéristique "obstacle".

13. Dispositif selon la revendication 11, caractérisé par
a) un second comparateur de forme des signaux avec une forme standard déposée intérieurement qui est égale à un signal de sortie zéro définie et une entrée par laquelle est conduit un signal réel extrait de la mémoire réelle (5) et une sortie qui, dans le cas d'une concordance des formes entre la forme standard et le signal réel, délivre un signal VRAI, et
b) une troisième porte ET dont la première entrée reçoit le signal à la sortie du second comparateur des formes des signaux et dont la seconde entrée reçoit le signal à la sortie du comparateur (8) et dont le signal de sortie dans le cas "VRAI" déclenche un signal de déclenchement et/ou d'alarme ayant pour caractéristique "encrassement".

14. Dispositif selon la revendication 11, caractérisé par un second comparateur des formes des signaux avec une forme standard déposée à l'intérieur qui est égale à un signal de sortie zéro définie et une entrée à laquelle est conduit le signal réel extrait de la mémoire réelle (5) et une sortie qui pour une concordance des formes entre la forme standard et le signal réel délivre un signal VRAI, qui déclenche alors un signal d'alarme et/ou de déclenchement ayant pour caractéristique "perte du réflecteur".
